# EUROPEAN PATENT APPLICATION

(11) **EP 4 693 970 A1**
(43) Date of publication of application: **11.02.2026**
(21) Application number: 25193351.1
(22) Date of filing: 01.08.2025
(51) Int. Cl.: H04L 1/00, H04L 1/1607, H04L 1/1812

(54) **CHANNEL CODING IN COMMUNICATIONS**

(30) Priority: 08.08.2024 FI 20245985
(71) Applicant: Nokia Technologies Oy, 02610 Espoo (FI)
(72) Inventor: KHOSRAVIRAD, Saeed Reza, Mountainside, NJ, 07092 (US)
(74) Representative: Kolster Oy Ab

(57) **Abstract**

An apparatus may establish (401) a rateless radio link for stable semantic/effective communication, R2S2, between the apparatus and a client device, wherein for the R2S2 link a desired quality of service, QoS, is defined including at least a desired packet length range of from a minimum data packet length Lmin to a maximum packet length Lmax. The apparatus may schedule (402) a supported packet length Ltx and target stable bit error rate for transmission via the R2S2 link, wherein Lmin ≤ Ltx ≤ Lmax.

## Description

### FIELD

The following example embodiments relate to wireless communication and to channel coding.

### BACKGROUND

General semantic/effective communication solutions rely on joint source channel coding, JSCC, where the source encoding (or decoding) and channel encoding (or decoding) may be performed jointly to minimize the volume of data transfer and maximize effectiveness of the data transfer.

### BRIEF DESCRIPTION

The scope of protection sought for various example embodiments is set out by the independent claims. The example embodiments and features, if any, described in this specification that do not fall under the scope of the independent claims are to be interpreted as examples useful for understanding various embodiments.

According to an aspect, there is provided an apparatus comprising at least one processor, and at least one memory storing instructions that, when executed by the at least one processor, cause the apparatus at least to:
establish a rateless radio link for stable semantic/effective communication, R2S2, between the apparatus and a client device, wherein for the R2S2 link a desired quality of service, QoS, is defined including at least a desired packet length range of from a minimum data packet length Lₘᵢₙ to a maximum packet length Lₘₐₓ;
schedule a supported packet length Lₜₓ and target stable bit error rate for transmission via the R2S2 link, wherein Lₘᵢₙ ≤ Lₜₓ ≤ Lₘₐₓ,
wherein an original data packet is encoded by rateless joint source and channel coding, into a string of bits by bit-wise treatment or into a string of symbols by symbol-wise treatment, wherein the string of bits or the string of symbols is reduced, by using a puncturing pattern, into a punctured data packet transmitted in uplink or downlink with the target stable bit error rate scheduled by the apparatus, such that the punctured data packet has the supported packet length Lₜₓ scheduled by the apparatus.

According to another aspect, there is provided an apparatus comprising:
means for establishing a rateless radio link for stable semantic/effective communication, R2S2, between the apparatus and a client device, wherein for the R2S2 link a desired quality of service, QoS, is defined including at least a desired packet length range of from a minimum data packet length Lₘᵢₙ to a maximum packet length Lₘₐₓ;
means for scheduling a supported packet length Lₜₓ and target stable bit error rate for transmission via the R2S2 link, wherein Lₘᵢₙ ≤ Lₜₓ ≤ Lₘₐₓ,
wherein an original data packet is encoded by rateless joint source and channel coding, into a string of bits by bit-wise treatment or into a string of symbols by symbol-wise treatment, wherein the string of bits or the string of symbols is reduced, by using a puncturing pattern, into a punctured data packet transmitted in uplink or downlink with the target stable bit error rate scheduled by the apparatus, such that the punctured data packet has the supported packet length Lₜₓ scheduled by the apparatus.

According to another aspect, there is provided a method comprising, by a network apparatus:
establishing a rateless radio link for stable semantic/effective communication, R2S2, between the apparatus and a client device, wherein for the R2S2 link a desired quality of service, QoS, is defined including at least a desired packet length range of from a minimum data packet length Lₘᵢₙ to a maximum packet length Lₘₐₓ;
scheduling a supported packet length Lₜₓ and target stable bit error rate for transmission via the R2S2 link, wherein Lₘᵢₙ ≤ Lₜₓ ≤ Lₘₐₓ,
wherein an original data packet is encoded by rateless joint source and channel coding, into a string of bits by bit-wise treatment or into a string of symbols by symbol-wise treatment, wherein the string of bits or the string of symbols is reduced, by using a puncturing pattern, into a punctured data packet transmitted in uplink or downlink with the target stable bit error rate scheduled by the apparatus, such that the punctured data packet has the supported packet length Lₜₓ scheduled by the apparatus.

According to another aspect, there is provided a computer program comprising instructions which, when executed by an apparatus, cause the apparatus to perform at least the following:
establish a rateless radio link for stable semantic/effective communication, R2S2, between the apparatus and a client device, wherein for the R2S2 link a desired quality of service, QoS, is defined including at least a desired packet length range of from a minimum data packet length Lₘᵢₙ to a maximum packet length Lₘₐₓ;
schedule a supported packet length Lₜₓ and target stable bit error rate for transmission via the R2S2 link, wherein Lₘᵢₙ ≤ Lₜₓ ≤ Lₘₐₓ,
wherein an original data packet is encoded by rateless joint source and channel coding, into a string of bits by bit-wise treatment or into a string of symbols by symbol-wise treatment, wherein the string of bits or the string of symbols is reduced, by using a puncturing pattern, into a punctured data packet transmitted in uplink or downlink with the target stable bit error rate scheduled by the apparatus, such that the punctured data packet has the supported packet length Lₜₓ scheduled by the apparatus.

According to another aspect, there is provided a computer readable medium comprising program instructions which, when executed by an apparatus, cause the apparatus to perform at least the following:
establish a rateless radio link for stable semantic/effective communication, R2S2, between the apparatus and a client device, wherein for the R2S2 link a desired quality of service, QoS, is defined including at least a desired packet length range of from a minimum data packet length Lₘᵢₙ to a maximum packet length Lₘₐₓ;
schedule a supported packet length Lₜₓ and target stable bit error rate for transmission via the R2S2 link, wherein Lₘᵢₙ ≤ Lₜₓ ≤ Lₘₐₓ,
wherein an original data packet is encoded by rateless joint source and channel coding, into a string of bits by bit-wise treatment or into a string of symbols by symbol-wise treatment, wherein the string of bits or the string of symbols is reduced, by using a puncturing pattern, into a punctured data packet transmitted in uplink or downlink with the target stable bit error rate scheduled by the apparatus, such that the punctured data packet has the supported packet length Lₜₓ scheduled by the apparatus.

According to another aspect, there is provided a non-transitory computer readable medium comprising program instructions which, when executed by an apparatus, cause the apparatus to perform at least the following:
establish a rateless radio link for stable semantic/effective communication, R2S2, between the apparatus and a client device, wherein for the R2S2 link a desired quality of service, QoS, is defined including at least a desired packet length range of from a minimum data packet length Lₘᵢₙ to a maximum packet length Lₘₐₓ;
schedule a supported packet length Lₜₓ and target stable bit error rate for transmission via the R2S2 link, wherein Lₘᵢₙ ≤ Lₜₓ ≤ Lₘₐₓ,
wherein an original data packet is encoded by rateless joint source and channel coding, into a string of bits by bit-wise treatment or into a string of symbols by symbol-wise treatment, wherein the string of bits or the string of symbols is reduced, by using a puncturing pattern, into a punctured data packet transmitted in uplink or downlink with the target stable bit error rate scheduled by the apparatus, such that the punctured data packet has the supported packet length Lₜₓ scheduled by the apparatus.

### LIST OF DRAWINGS

In the following, various example embodiments will be described in greater detail with reference to the accompanying drawings, in which
FIG. 1 illustrates an example of a wireless communication network;
FIGs 2 to 4 illustrate an exemplary training process;
FIG. 5 illustrates an exemplary retraining process;
FIGs 6 to 7 illustrate an example of adjusting a pre-trained network;
FIG 8 illustrates an exemplary method;
FIG. 9 illustrates an example of BER vs. effective SINR/MI;
FIG. 10 illustrates an example of BER estimation;
FIG 11 illustrates an example of packet transmission;
FIG 12 illustrates an example of packet puncturing;
FIGs 13 to 15 illustrate an exemplary method;
FIGs 16 to 17 illustrate exemplary apparatuses.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Some example embodiments described herein may be implemented in a wireless communication network comprising a radio access network based on one or more of the following radio access technologies (RATs): Global System for Mobile Communications (GSM) or any other second generation radio access technology, Universal Mobile Telecommunication System (UMTS, 3G) based on basic wideband-code division multiple access (W-CDMA), high-speed packet access (HSPA), Long Term Evolution (LTE), LTE-Advanced, fourth generation (4G), fifth generation (5G), 5G new radio (NR), 5G-Advanced (i.e., 3GPP NR Rel-18 and beyond), or sixth generation (6G). Some examples of radio access networks include the universal mobile telecommunications system (UMTS) radio access network (UTRAN), the Evolved Universal Terrestrial Radio Access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

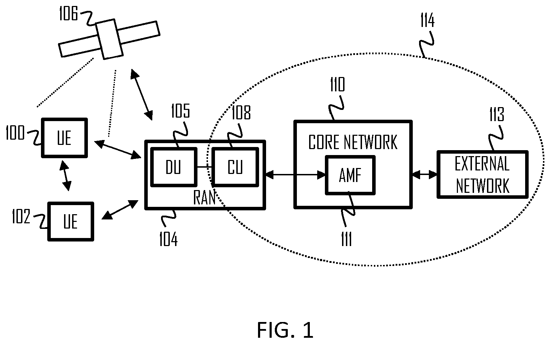

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the example embodiments described herein to other wireless communication networks provided with necessary properties.

The example wireless communication network shown in FIG. 1 includes a radio access network (RAN) and a core network 110.

FIG. 1 shows user equipment (UE) 100, 102 configured to be in a wireless connection on one or more communication channels in a radio cell with an access node 104 of a radio access network.

The access node 104 may comprise a computing device configured to control the radio resources of the access node 104 and to be in a wireless connection with one or more UEs 100, 102. The access node 104 may also be referred to as a base station, a base transceiver station (BTS), an access point, a cell site, a network node, a radio access network node, or a RAN node. The access node 104 may be, for example, an evolved NodeB (abbreviated as eNB or eNodeB), or a next generation evolved NodeB (abbreviated as ng-eNB), or a next generation NodeB (abbreviated as gNB or gNodeB), providing the radio cell. The access node 104 may include or be coupled to transceivers. From the transceivers of the access node 104, a connection may be provided to an antenna unit that establishes a bi-directional radio link to one or more UEs 100, 102. The antenna unit may comprise an antenna or antenna element, or a plurality of antennas or antenna elements.

The wireless connection (e.g., radio link) from a UE 100, 102 to the access node 104 may be called uplink (UL) or reverse link, and the wireless connection (e.g., radio link) from the access node 104 to the UE 100, 102 may be called downlink (DL) or forward link. A UE 100 may also communicate directly with another UE 102, and vice versa, via a wireless connection generally referred to as a sidelink (SL). It should be appreciated that the access node 104 or its functionalities may be implemented by using any node, host, server, access point or other entity suitable for providing such functionalities.

The radio access network may comprise more than one access node 104, in which case the access nodes may also be configured to communicate with one another over wired or wireless links. These links between access nodes may be used for sending and receiving control plane signaling and also for routing data from one access node to another access node.

The access node 104 may further be connected to a core network (CN) 110. The core network 110 may comprise an evolved packet core (EPC) network and/or a 5^{th} generation core network (5GC). The EPC may comprise network entities, such as a serving gateway (S-GW for routing and forwarding data packets), a packet data network gateway (P-GW) for providing connectivity of UEs to external packet data networks, and/or a mobility management entity (MME). The 5GC may comprise one or more network functions, such as at least one of: an access and mobility management function (AMF) 111, a user plane function (UPF), a location management function (LMF), and/or a session management function (SMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

It should also be understood that the distribution of functions between core network operations and access node operations may differ in future wireless communication networks compared to that of the LTE or 5G, or even be non-existent.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device, just to mention but a few names. The UE 100, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, or a computing device comprising a wireless modem integrated in a vehicle.

It should be appreciated that the UE 100, 102 may also be a nearly exclusive uplink-only device, of which an example may be a camera or video camera loading images or video clips to a network. The UE 100, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. For example, at least part of core network operations may be carried out as a cloud service (this is depicted in FIG. 1 by "cloud" 114). The UE 100, 102 may also utilize the cloud 114. In some applications, the computation for a given UE may be carried out in the cloud 114 or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

5G enables using multiple-input and multiple-output (MIMO) antennas in the access node 104 and/or the UE 100, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, access nodes and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave).

5G wireless communication networks may also apply network slicing, in which multiple independent and dedicated virtual sub-networks (network instances) may be created within the same physical infrastructure to run services that have different requirements on latency, reliability, throughput and mobility.

In one embodiment, an access node 104 may comprise: a radio unit (RU) comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node 104 may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node 104. The CU 108 may comprise a control plane (CU-CP), which may be a logical node hosting the RRC and the control plane part of the PDCP protocol of the NR protocol stack for the access node 104. The CU 108 may further comprise a user plane (CU-UP), which may be a logical node hosting the user plane part of the PDCP protocol and the SDAP protocol of the CU for the access node 104.

The DU 105 may be a logical node hosting radio link control (RLC), medium access control (MAC) and/or physical (PHY) layers of the NR protocol stack for the access node 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the radio access network by utilizing network function virtualization (NFV) and software defined networking (SDN). Using edge cloud may mean access node operations to be carried out, at least partly, in a computing system operationally coupled to a remote radio head (RRH) or a radio unit (RU) of an access node 104. It is also possible that access node operations may be performed on a distributed computing system or a cloud computing system located at the access node 104. Application of cloud RAN architecture enables RAN real-time functions being carried out at the radio access network (e.g., in a DU 105), and non-real-time functions being carried out in a centralized manner (e.g., in a CU 108).

5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network 110, enabling more extensive network coverage. Possible use cases may include: providing service continuity for machine-to-machine (M2M) or Internet of Things (IoT) devices or for passengers on board of vehicles, or ensuring service availability for critical communications, and future railway, maritime, or aeronautical communications. Satellite communication may utilize geostationary earth orbit (GEO) satellite systems, but also low earth orbit (LEO) satellite systems, in particular mega-constellations (i.e., systems in which hundreds of (nano)satellites are deployed). A given satellite 106 in the mega-constellation may cover several satellite-enabled network entities that create on-ground cells. The on-ground cells may be created through an on-ground relay access node or by an access node located on-ground or in a satellite.

It is obvious for a person skilled in the art that the access node 104 depicted in FIG. 1 is just an example of a part of a radio access network, and in practice the radio access network may comprise a plurality of access nodes 104, the UEs 100, 102 may have access to a plurality of radio cells, and the radio access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) 104 of FIG. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of radio access networks, the concept of "plug-and-play" access nodes may be introduced. A radio access network, which may be able to use "plug-and-play" access nodes, may include, in addition to Home eNodeBs or Home gNodeBs, a Home Node B gateway (HNB-GW) (not shown in FIG. 1). An HNB-GW, which may be installed within an operator's radio access network, may aggregate traffic from a large number of Home eNodeBs or Home gNodeBs back to a core network 110 of the operator.

Some example embodiments are described below using principles and terminology of 5G radio access technology without limiting the example embodiments to 5G radio access technology, however.

Current cellular technologies including the 5G NR, as it pertains to the transmission of a packet of data, treat a radio bearer on the basis of a QoS/QoE set of requirements. Additionally, packets that are failed in decoding before the latency budget, are dropped from the buffer. For a wide variety of applications, the erroneous packet may still be useful for the application. An effective E2E radio link may be used where packets with decoding error are augmented with additional information regarding the decoding state and are passed onto the application in a so called effective information packet (EIP). Functions of different layers in the RAN layer stack may be bypassed and the application may be provided with the noisy packet. A group of such applications may have multiple tasks, e.g., reconstructing a video and detecting objects in the video, each with a different end-to-end QoS requirement. This may apply to other low latency applications too, e.g., video streaming, XR, audio, etc. It may be possible to train a ML based source code for such applications, where the source coder imposes a non-uniform importance over the output bits, thus during the coding it includes more of the critical information within the bits with higher importance, while encoding the less critical information within the low importance bits. It may further be possible to use a separate ML based code in the network, which is trained using the abovementioned source code, to map the source bits into channel symbols. As a result, the network may need to be aware of the non-uniform pattern at the source coder, and to treat the source bits differently according to that pattern. An alternative approach may be to use a non-uniform source coder, which reduces that load on the network and minimizes reliance on the network. Particularly, it may be possible to use a family of novel codes, dubbed error conversion codes, to encode the source encoded bits at the application before passing them to the network. This may minimize the overhead on network performance, and more importantly, it may only need a low-cost (e.g., high BER) link from the network, which reduces the strain on network resources.

In a semantic communication system, an end-to-end system may be designed to convey required information for face recognition at an edge server instead of full video stream from a camera. The effective communication system may be designed to improve effectiveness of the interactions between a cloud controller and a remotely controlled robot. Applications using a communication service where the application may be able to tolerate different levels of distortion for different parts of the communication packet. Joint source and channel coding may be commonly used for designing semantic communication systems.

Semantic/effective communication solutions may rely on JSCC, where the source encoding (decoding) and channel encoding (decoding) are carried out jointly to minimize the volume of data transfer and maximize effectiveness of the data transfer. However, this may be infeasible within the way current cellular technologies are designed, which is on the basis of separating those functions between the application and the network. Therefore, it may be recommended to perform JSCC at one of the applications or the network.

Semantic/effective communication with JSCC may become more efficient when the knowledge of channel state is utilized in JSCC (for channel with memory). However, this may require to either create a feedback link from the network to the app to consistently share the channel state with the app so that the app is able to perform JSCC, or, for the app to share its information with the network and allow for JSCC to be done at the network. Both approaches are infeasible: the former creates a high overhead while the latter breaches privacy. A JSCC code for semantic/effective communications may give non-uniform importance to information bits. This is to acknowledge the fact that parts of the information may be more critical than others towards the semantic/effective goals of the application. The criticality of the information is difficult and in many cases impossible to model, thus data-driven approaches may be the most common ones used to identify the critical information. It may therefore not be possible in majority of application types to optimize the JSCC code and the non-uniform pattern of importance. An aspect of the QoS from a network link for semantic/effective service type is the stability of the service. That is, fluctuation of the service over time may need to be minimized. A typical network link, however, may perform on a best effort basis to guarantee QoS in a statistical sense. Only in case of e.g. URLLC links, the network may be able to guarantee a minimum service for almost all the time. However, that comes at a very high cost for the network. Semantic/effective communications is to maximize the efficiency of the network resource utilization. Thus, the classical approaches to harden network link QoS over time may not be applicable.

For effective communication such as robotic control, a critical part of a control message may include direction and number of steps of movement to avoid bumping into objects, while less critical aspects may include velocity and acceleration pattern to follow, which may be used to improve energy efficiency but may be less critical to the control and may follow the zero-hold assumption if missed. Spatial video streaming for HMD goggles, as well as typical real-time video streaming for virtual conferencing, may require to deliver a continuous minimum service level while benefiting from added bandwidth when the network is in low load. This may currently be controlled by use of inefficient video codecs as well as establishing multiple communication links for the different levels of codec rate.

Effective information packet (EIP) may allow RAN stack layers to pass on an erroneous decoded packet to the receiver side application, e.g., in scenarios where the application may extract effective/semantic information from the erroneous packet.

In an embodiment, a wholistic and efficient solution for symbiotic operation between the network and application for various use cases may be provided. The network may provide a stable and low-cost link for the application to transmit its JSCC encoded bits. The network may guarantee a range of service quality, where the minimum of said range may correspond to a minimum requirement of the application related to its critical information. In case the load on the network allowing, a service in the upper end of the target range may be provided. The application may perform JSCC in a way that when using the minimum service quality from the network, the application may communicate its critical information, and in case of better service from the network, the application may communicate the critical information plus as much information as possible from the non-critical part.

An embodiment may involve a proper link establishment for semantic/effective communication and for implementation of the network apparatus(es), e.g., the gNB, to guarantee service for the link. An embodiment may involve an implementation for an application or device, such as an Apple vision pro, cloud application, video streaming application, etc., to perform proper JSCC that is able to fit the link.

### Rateless and lossy joint source channel coding

In an embodiment, a category of JSCC codes is disclosed, which may be referred to as rateless and lossy JSCC codes. The rateless JSCC codes may encode an information packet into a string of bits where in terms of bit-wise treatment (e.g., noise level or BER performance) each bit may be treated in the same way by the network. Alternatively, the rateless JSCC codes may encode an information packet into a string of symbols by symbol-wise treatment. However, in terms of puncturing, i.e., the length of the packet to be communicated by the network, the bits, or symbols, may possess a distinct priority over one another. The priority may be utilized by the network to puncture the string of bits, or string of symbols, to shorter channel packets when the network is in high load or in poor channel conditions, and vice versa, to allow more of the bits, or symbols, to pass to the channel packet when network is in low load or strong channel conditions. The JSCC may ensure a minimized loss of the information for both the extreme scenarios above and the cases in between, suited to semantic/effective applications. A set of signaling and coordination methods for the network to accommodate such rateless JSCC codes for semantic/effective communication may be provided, as well as implementation features for the network node to operate such link type. Packet puncturing may also be referred to as packet truncation and/or packet slicing.

In an embodiment, a communication link may be configured, by using effective communication and semantic communication, to convey semantics of a message as effectively as possible, rather than the message itself. An embodiment discloses a network operation for semantic/effective communication by creating a link type dubbed R2S2 (rateless radio link for stable semantic/effective communications), which may behave like a pipe with certain quality metrics for bits communicated by the application. Specifically, a pipe of bits with stable BER may be targeted. The network terminal operation may be included. The link type may enable to create a wholistic network design for semantic/effective communication. In an embodiment, the application may be able to joint source and channel code for the proposed R2S2 link with variable rate, using a new category of codes dubbed rateless JSCC codes.

In one embodiment, rateless and lossy JSCC codes for video streaming, XR, and semantic/effective communication may be provided. In one embodiment, a set of novel signaling and coordination methods for the network to accommodate such rateless JSCC codes for semantic/effective communication, may be provided, as well as implementation features for the network node to operate such link type.

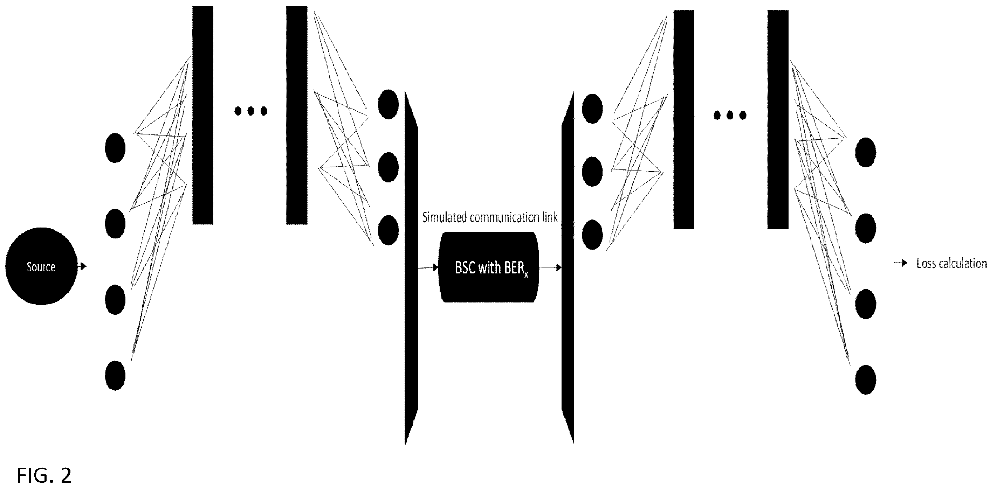

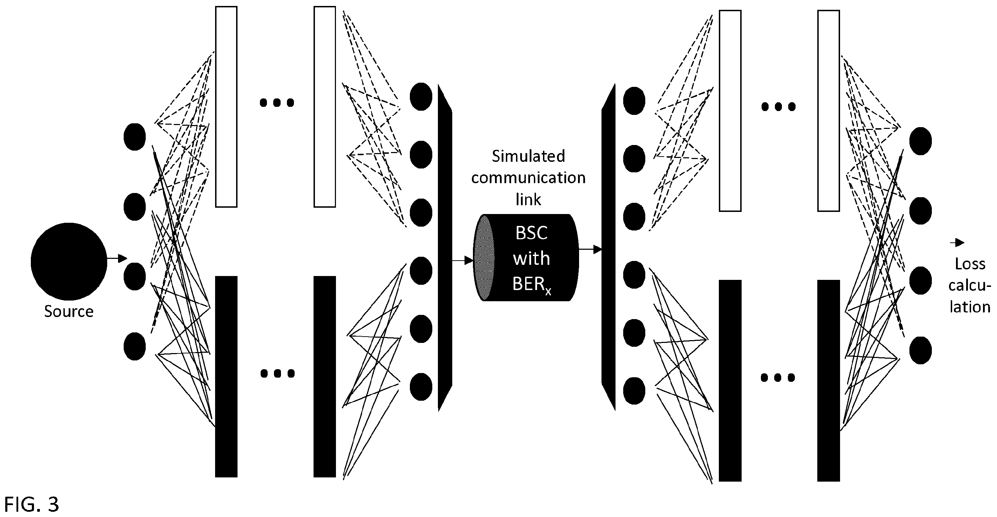

In an embodiment, training and combining M sets of encoder/decoder neural networks (NNs), e.g., autoencoder NNs, may be performed. The set of encoder NNs may have the same input dimensions but potentially different output dimensions, and the set of decoder NNs may be the mirror of those in terms of dimensions. The first encoder/decoder NNs may be trained (either separately or jointly) for minimizing a JSCC loss function for the available set of training data. Then, the first set of encoder/decoder NN may be combined with a second set of encoder/decoder NNs, and the training may be repeated over the training data while the first set of encoder/decoder NNs may be frozen in this training process. The training process may continue until all the M sets of encoder/decoders are trained. At each step of the training, the previous sets of encoder/decoders may be frozen (see Fig. 2 and Fig. 3 for the example case of M=2). The output length of encoder (input length of decoder) in each set may be based on a set of expected length of packets to be transmitted over a network medium, e.g., a minimum and maximum packet length operated by a network medium. In the training of the set of encoder/decoders, a simulated communication link may be used between the encoder output and the decoder input, which may emulate the behavior of a target network medium during the training process of the encoder/decoder sets. For example, the simulated link may perform random bit flipping of a certain BER to emulate a network pipe of bits with BER as QoS.

In an embodiment, an efficient JSCC coding scheme that operates with the existing cellular networks, with minimal network modifications, may be provided for sematic/effective communication services. The rateless JSCC may be modular. The code may be easily appended for supporting different packet sizes or different BERs in real time. The training process for the modular autoencoder may be controlled. Step of the training process may focus on training the weights for one set of encoder/decoder. No exchange of channel state information may be needed between the application and network. The network may unilaterally use the rateless JSCC codeword and puncture it based on the channel conditions to a length that is able to guarantee the desired BER. No exchange of source coding routine, or source coding importance pattern may be required between the application and the network. The network may only need to know a minimum packet size that is to be guaranteed at the desired BER. This enables the strain on the communication resources to be relaxed. The network may guarantee a minimum quality of service which is to be provided stably with minimal fluctuation over time. Generally, with a high BER link of fixed packet size, this may be much more efficiently managed by the network, as opposed to reliable communication for critical part of semantic information. In case the network has resources to spare, the network may also support the exchange of non-critical information.

For example, using M=2 sets of encoder/decoders with a simulated channel of BSC with error rate of BERₓ, and using the sequential training of the modular JSCC code, the following may apply. The most critical information from the source may be encoded (i.e. compressed) into the output of the first encoder. This may be achieved by training the first encoder/decoder to minimize the desired semantic/effective loss function, thus forcing the autoencoder to encode the most critical information from the point of view of the semantic application into the first set of encoded bits or symbols. The second set of encoder/decoder may allow for more information from the critical source information, as well as some of the less critical information to be encoded into the second set of encoder output bits or symbols. By imposing a simulated erroneous channel in between encoder and decoder during training, the encoding may be trained to account for errors over the communication channel, thus training for error correction code encoder and decoder functionalities in the NN set, as well as source coding, i.e. compression.

In an embodiment, the training of a first set of NN encoder/decoder for source coding, or for joint source and channel coding, i.e., training over erroneous channel, may be carried out, to minimize an end-to-end loss function referring to the semantic/effective application using the JSCC code. Examples of applications may include multi-media compression and decompression applications such as video streaming and/or audio streaming, and/or any effective communication such as remote robotic control, etc. The encoder/decoder may be trained either separately or jointly. The input length of the encoder and/or output length of the decoder may be determined based on source signal dimensions, while the output length of the encoder and/or input length of the decoder may be determined based on a desired compression rate. The training process may be carried out over a set of training data generated by the same source, i.e. same distribution of source information. The NN used for the encoder/decoder may be a recurrent NN, i.e., RNN, autoencoder, because such NNs may be the most effective for source/channel encoding/decoding. The first NN set may then be frozen, and connected to a second set of NN encoder/decoder, to train the second set of encoder/decoder NNs.

In one embodiment (Fig. 3), the second NN set may only be connected at the input layer of the encoder, i.e. using the exact same input or overlapping segments of the same input signal, and the output layer of the decoder (in the same way).

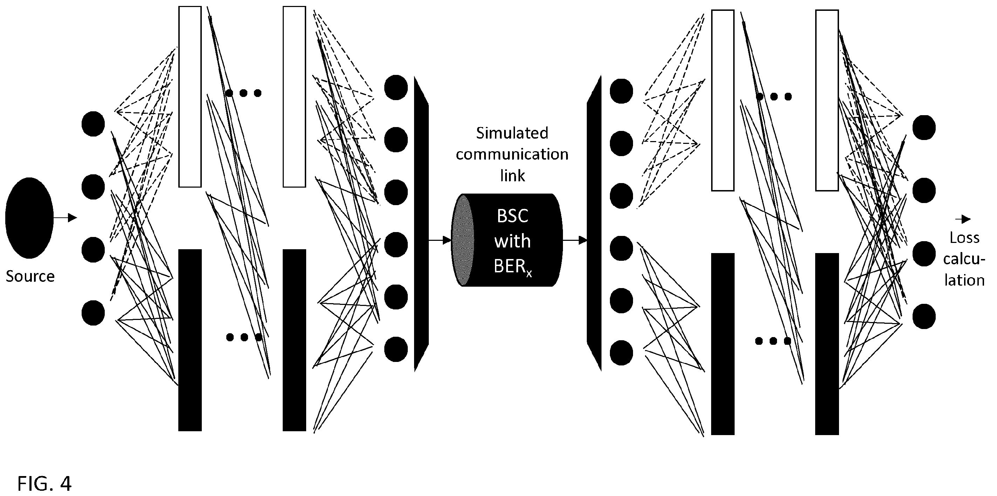

In one embodiment (Fig. 4), the output of one or each of the hidden layers from the first set of NNs may be used as input to one or each of the hidden layers of the second set of NNs. This may e.g. be used to speed up the training process.

Figure 2 illustrates training the first set NN for minimizing the semantic loss (solid lines). Figure 3 illustrates training the second part of NN (solid lines) for minimizing the semantic loss, while freezing the first NN (dashed lines). Figure 4 illustrates an alternative embodiment, where connections illustrated with solid lines are created from neurons in the first NN to the neurons in the second NN; the connections illustrated with dashed lines remain frozen during the training.

In an embodiment, the combined network, except for the frozen parts, may be trained over the training data set to minimize the semantic/effective loss function. All or part of the weight values trained for the first set of NN may be used as initialization point for the training of the second set of NN, to speed up the training process. In case of more than two sets of NN encoder/decoders, a previously frozen trained combination is combined with a further set of encoder/decoder neural networks, training of the further combination over the available training data is performed, and the trained further combination is frozen, until each of the M number of sets of encoder/decoder neural networks has been combined, trained and frozen. Thus, each time a new set of NN module is added to the combined network and the training is repeated.

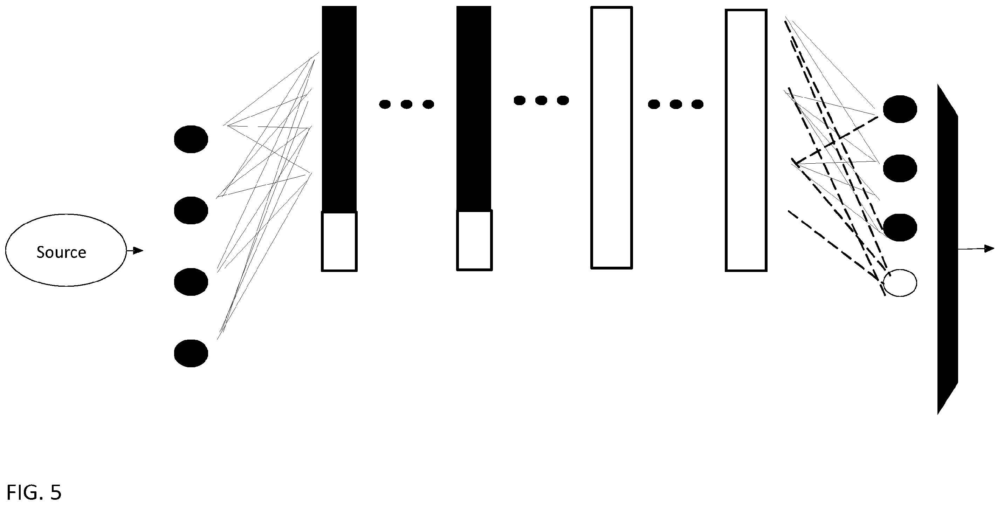

In an embodiment, the rateless JSCC may be retrained for a BER other than the initial training BER. To retrain the network for a different BER, e.g., a BER_{y} where BER_{y} > BERₓ, the following may apply. The retraining (dashed lines in Fig. 5) may be performed for each encoder/decoder set separately, wherein one or more hidden layers may be appended to the output layer of the encoder and to the input of the decoder. This is illustrated in Fig. 5 for the encoder, where hidden layers may be added to the existing trained network (solid lines in Fig. 5), and/or dimension of the existing hidden layers may be increased, to accommodate a higher BER. The number of layers and the connections may be chosen so that e.g. the retraining may converge to the same loss value. Thus the pre-trained network architecture may be adjusted and the training may be fine-tuned (dashed lines in Fig. 5) for changing the underlying loss rate BER.

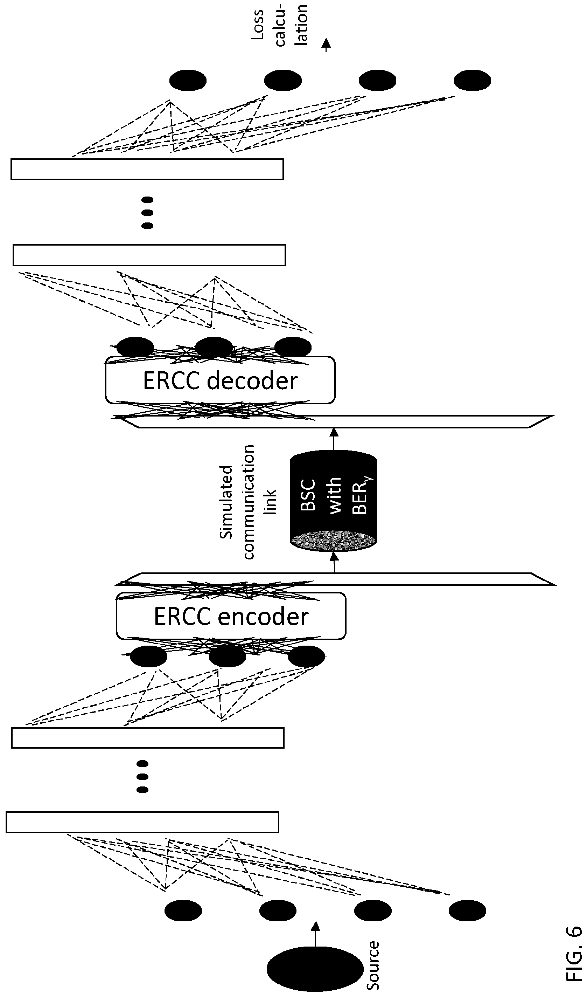

In an embodiment, the encoder and decoder set may comprise an encoder and decoder for error rate conversion code (ERCC). The NN set may be retrained over the data set, e.g., in case of ML based ERCC. This is illustrated in Fig. 6 where a pre-trained (dashed lines in Fig. 6) network may be adjusted (solid lines in Fig. 6) using error rate correction codes for changing underlying loss rate BER.

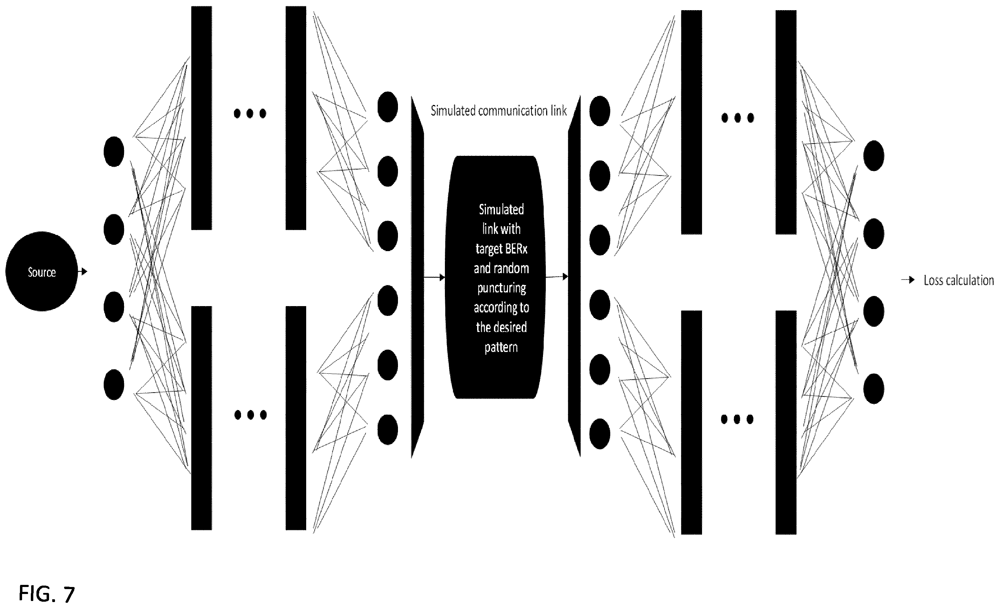

Alternatively, in an embodiment, the training process may be able to simulate the full operation of the underlying link during the training of the full rateless JSCC network. That is, not only the BER but also the random puncturing of the packet according to the desired pattern and the desired range of packet size may be applied to the simulated link. The NN training may thus cover the random process of the data set and the random process of the puncturing, which may require a longer training process with the likelihood of hitting local optimum. This is illustrated in Fig. 7 where a pre-trained network may be adjusted using error rate correction codes for change of underlying loss rate (BER).

In an embodiment, the training process may involve fine-tuning over a real network link. The last layer or few last layers of the NN sets, or one of the encoders or decoders, may be a subject to the fine-tuning training. This may mean that during the deployment of the trained JSCC code over the real network link, a small subset of the training data may be run through the encoder and decoder using the network provided link, and the fine-tuning layers may further be modified for the subset of the training data. In such a process, the receiver side may report back the computed loss to the transmitter side as well. The fine tuning may happen as an initial phase before the communication starts, or interleaved with the communication process.

### Establishing rateless and lossy effective and semantic communication (SIP)

In an embodiment, a bit pipe or symbol pipe may be established for the rateless JSCC code by the network (step 1). In step 1a, the application using the rateless JSCC code and the network may agree on establishing a semantic/effective link. The desired QoS for such a link may include one or each of the following: a desired BER, a packet length range, a desired latency budget, and/or service stability. In step 1b, the packet length range of step 1a may be established in a form of a minimum length (Lmin) and a maximum length (Lmax) for a packet in bits. The minimum packet length Lmin is guaranteed by the network at the agreed BER, while packet length between minimum and maximum range is provided by the network on a best effort basis. E.g., network may choose to deliver any number of bits between Lmin and Lmax at the agreed BER, depending on the network load and/or channel conditions. In step 1c, a feedback channel may be established. The feedback channel may be specified and used for the following two use cases: 1) HARQ feedback in case HARQ is activated for the link, and/or 2) R2S2 feedback sent at the end of latency budget for each packet. The content of the feedback may be one or more of the following: ACK/NACK signal respectively reporting that the estimated BER meets the desired BER or is higher, or a multi-bit feedback that may represent the gap between the desired BER and the estimated BER. In step 1d, reference bits/symbols may be established for BER estimation. A transmission over the proposed link may be accompanied by reference bits or symbols, where the pattern of embedding the reference bits and the content of the bits may be pre-specified and/or pre-coordinated. The ratio of the reference bits over the payload bits may follow channel characteristics, including number of coherence blocks experienced by the packet.

The established link may have EIP activated for it, i.e., the received packet at the receiver side of the network may be delivered to the application regardless of MAC/RLC ACK or NACK.

In an embodiment, a transmitter side network client may be scheduled by a scheduler for transmission, for example, UE in UL case, gNB in DL case (step 2). In step 2a, a set of attributes may be created for the transmission based on the target stable BER. The set of attributes may include at least the transmission size Ltx, and may include modulation order, coding scheme/rate, and transmit power. In step 2b, the transmission attributes may be chosen using one or more the following:
- For transmission supported with coding, the coded BER curves or look-up tables for each modulation and coding scheme, given packet size and estimated channel strength.
- For transmission without channel coding support, the uncoded BER curves or look-up tables for each modulation order, given the packet size and estimated channel strength.
- R2S2 feedback for closed-loop link adaptation of step 3a to 3c.
- A pre-trained ML function that may be trained on the above inputs to determine the transmission attributes given the desired BER, packet size, and estimated channel strength.

In step 2c, in case of dynamic scheduling, the transmission attributes from step 2a and 2b may be received over control signaling by UE in both DL and UL. In step 2d, in case of DL, scheduling signaling may be accompanied by a metric related to the desired BER, e.g., over DCI, which may be used as a reference point by the receiver to measure performance of the received packet and create feedback accordingly. The metric may e.g., include one or multiple of the following: 1) ratio or the number of bits estimated to be erroneous, or 2) statistics, e.g., average, of effective SNR or effective MI metric. In step 2e, scheduling signaling may configure the BER estimation reference bits or symbols from step 1d. The BER estimation reference bits may be configured semi-statically e.g., by RLC signaling or dynamically by MAC signaling. In step 2f, in case of HARQ, step 2c may be repeated for scheduling of each retransmission while also including the HARQ feedback in determining the transmission attributes.

In an embodiment, the transmitter side may prepare the transmission based on steps 2a to 2f and perform transmission of a punctured packet (step 3). In step 3a, the application may encode its information into Lmax bits in each transmission occasion and deliver the bits to the network client. The application may perform the encoding e.g. using a rateless JSCC code, wherein the loss for the semantic/effective application is minimized, e.g. through training, for each length of the packet between Lmin and Lmax at the agreed BER. While Ltx may be a time varying parameter and may be decided per packet by the network, Lmax and Lmin may be static parameters describing the link QoS. In step 3b, the radio client may puncture the application packet to Ltx, e.g. using a puncturing pattern received over control signaling. Puncturing of the Lmax bits into Ltx may follow a pre-agreed pattern; e.g., the least significant bits may be conveyed by the application at the end of the sequence and vice versa; thus the puncturing may start from the end of the string. In step 3c, the punctured packet may be mapped to the attributes from step 2a. The packet may be transmitted.

In an embodiment, the receiver may perform reception and prepare feedback (step 4). In step 4a, the receiver may perform reception including detection, equalization, demodulation and decoding, given the attributes in step 3a. In step 4b, in case HARQ is used, receiver may store the received signals from retransmissions in buffer and perform at least one of the following:
- 1) Decoding only at the end of the HARQ process: in such case, HARQ feedback may be generated on the basis of estimated uncoded BER.
- 2) Decoding after each (re)transmission of the same packet: in such case, HARQ feedback may be generated based on estimated coded BER.
- 3) HARQ feedback may be generated by measuring an effective SINR or effective MI from the received signal. The feedback may also be computed based on the reference bits in step 2e.

In step 4c, at the end of the transmission attempts for each packet, a feedback occasion may be scheduled and used by the receiver to convey information similar to step 4b3). This feedback may be used for closed-loop control and stabilization of BER.

In an embodiment, the received packet at the receiver side may be delivered to the application (step 5). In step 5a, a header may be attached to the packet delivered to the application, notifying the supported length Ltx. This may be crucial given the time variance of Ltx. In step 5b, the receiver side of application may also be provided by the soft bits or symbols from the receiver network functions. This may be done e.g. by quantization of the soft values into a quantization level per bit. The quantization level configuration may be either statically preconfigured between network and application or conveyed over the header to the application. In step 5c, the receiver side of the application may perform JSCC decoding on the received packet to extract the information from the source. This may be based e.g. on using the rateless JSCC decoder.

An efficient communication link operation for semantic/effective communication may be provided and rateless JSCC is enabled. Strain on the communication resources may be relaxed. The network may guarantee a minimum quality of service which may be provided stably with minimal fluctuation over time. Generally, with a high BER link of fixed packet size, this may be more efficiently managed by the network as opposed to reliable communication for critical part of semantic information. In case the network has resources to spare, it may support the exchange of non-critical information also. No exchange of channel state information may be needed between the network and the application. No exchange of source coding routine, or source coding importance pattern may be required between the application and network. The network may only need to know a minimum packet size that is to be guaranteed at the desired BER.

In an embodiment, the link type enables service stability, offering a temporally stable service, e.g., in form of BER. This may mean that the stable BER service may be at the target level, or it may be better than the target level. Therefore, to measure QoE for such services, one metric may be service stability, e.g., the ratio of time where BER is above the target level. Such ratio is to be kept below a threshold to guarantee service stability. Variable packet length may guarantee on packet length (bandwidth/capacity) are relaxed for the link QoS. The network is to only guarantee a minimum length for the packet, while in a best effort manner it may provide longer packet length, e.g. when load on the network is low or channel quality is strong. Retransmissions may be optional. In many semantic/effective applications, the received packets, even if erroneous from the coding perspective, may still be useful for the application and are to be passed on to the application. Therefore, typical retransmission mechanisms, such as MAC HARQ or RLC ARQ may only be useful in the context of the proposed link type to maintain stability of the service. E.g., in case of BER as the main service requirement, the MAC HARQ retransmissions may be performed to improve the BER, without the need for HARQ feedback. Instead, as is discussed below, a BER control feedback may be proposed for such a link type, which may be e.g., a MAC layer feedback, which may enable to stabilize BER in the closed-loop link adaptation process.

As described above, in step 1, a rateless radio link for stable semantic/effective communications (R2S2) link may be established. The radio link may be an end-to-end link, e.g., a sequence of links including wire link and more than one hop of radio links may also be targeted for a similar link establishment process. The desired metrics of QoS for the R2S2 link may include one or more of the following:
- Bit error rate: the ratio of bits of the delivered packet length (L_tx), that are flipped in hard coded format. The metric may then be measured for each time instance separately. E.g., measuring BLER in typical radio links is over time, e.g., ratio of erroneous blocks over time.
- Packet length range: a minimum length (Lmin) and a maximum length (Lmax) for packet e.g., in bits or symbols. The minimum packet length Lmin may be guaranteed by the network at the agreed BER, while the packet length between minimum and maximum range may be provided by the network on a best effort basis. This may be different from typical network treatment of a packet, where network by default assumes that each bit/symbol in a packet are to be delivered.
- Desired latency budget: This may be the total time that the network is able to utilize to deliver at least Lmin bits of the packet, at desired BER. The packet at the receiver side, regardless of the service quality and erroneous bit rate may be delivered to the receiver. A typical latency budget for a packet is the period of time that network may try to deliver a packet erroneously.
- Service stability rate is a measure to capture the stability of BER, where the ratio of transmission instances where BER is above the desired level are to be lower than a target threshold.

The application and the network may agree on establishing a semantic/effective link. The application may have a required (Lmin, BER) tuple which may correspond to the minimum length of the rateless JSCC code used by the application. The (Lmin, BER) tuple may be chosen by the application based on the JSCC code to ensure a target semantic/effective loss. The minimum packet length Lmin may be guaranteed by the network at the agreed BER, while packet length between the minimum and maximum range may be provided by the network on a best effort basis. E.g., the network may choose to deliver any number of bits between Lmin and Lmax at the agreed BER, depending on the network load and or channel conditions. The established link may have EIP activated for it, i.e. the received packet at the receiver side of the network may be delivered to the application regardless of MAC/RLC ACK or NACK.

In an embodiment, the desired BER from step 1a may be established in the form of a minimum and maximum BER, where the maximum BER is guaranteed by the network at the agreed packet length, while BER between the maximum and minimum range may be provided by the network on a best effort basis.

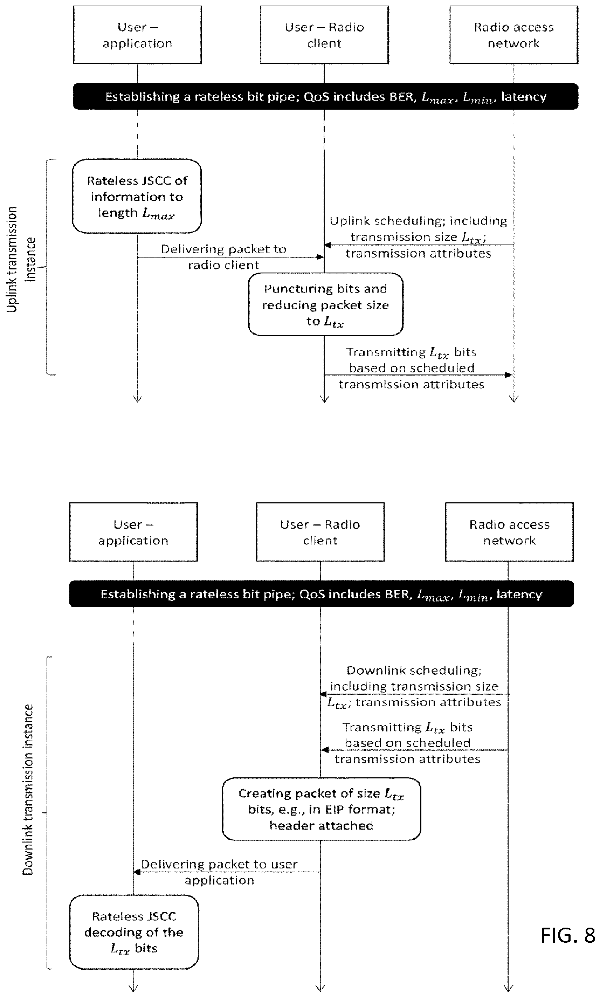

Fig. 8 illustrates uplink and downlink operations.

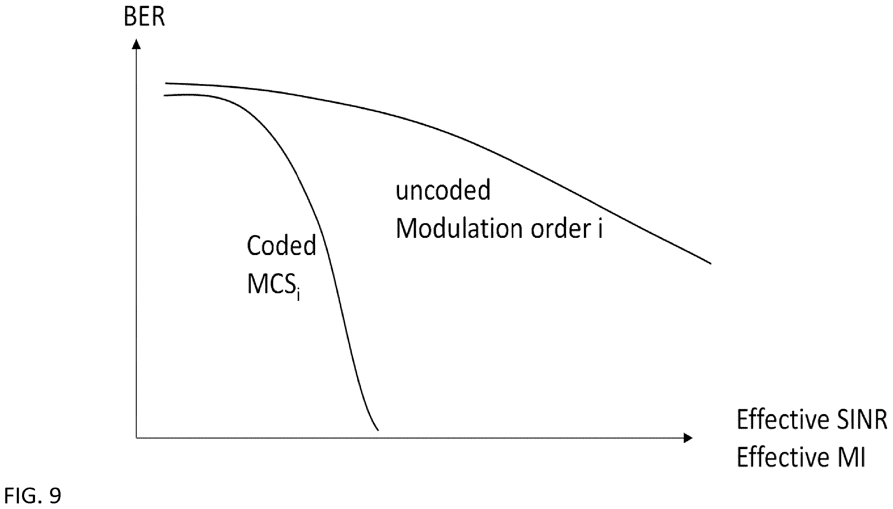

As described above, in step 2, scheduling for the R2S2 link may be performed. This may include finding the transmission attributes. In a typical scheduler, to achieve a target BLER, a look-up table may be used that may be created for each MCS index and packet size. Similarly, for BER control, the scheduler may use a look-up table that matches the coded BER for each MCS index or uncoded BER to modulation index. The scheduler may first look at the packet length that is possible to be guaranteed at the target BER. The look up table may map an effective SINR or effective mutual information (MI) to the BER measurement. Fig. 9 illustrates BER vs. effective SINR/MI for a given coding and modulation setting.

At first, the effective SINR or effective MI may be computed given the transmit power and the estimated channel strength. Then, the remainder of the transmit attributes, including MCS/modulation index, may be chosen using one or more of the following processes:
∘ For transmission supported with coding, the coded BER curves or look-up tables for each modulation and coding scheme, given packet size and estimated channel strength.
∘ For transmission without channel coding support, the uncoded BER curves or look-up tables for each modulation order, given the packet size and estimated channel strength.
∘ Feedback from the closed look link adaptation in step 3e may also be used. In this process, the feedback computed effective SINR/MI may be added to the computed effective SINR or effective MI for the instantaneous channel.

A pre-trained ML function may be trained on the above two options to determine transmission attributes given the desired BER, packet size, and estimated channel strength. This may be fairly similar to the current scheduler design with the minor difference that the target is BER on a per packet basis, as opposed to average BLER across a multitude of packets.

In typical communication systems, given that BLER is the main KPI, a CRC code may be attached to each packet which may be used at the receiver side to determine whether the packet is correctly decoded or erroneous. An embodiment may involve reference bits/symbols and estimating BER at the receiver. Thus having the BER as the main KPI is not useful. In fact, given the unavailability of the actual information at the receiver side, an accurate measure of BER may not be possible. As a result, the receiver is to perform an estimation of the BER over each received packet. This may be carried out using one or more of the following:
- Using reference bits: A number of reference bits or symbols may be embedded into the packet transmission, e.g. in case channel codes are used, the reference bits may be added prior to encoding. The receiver may use the error ratio experienced over the reference bits or symbols, e.g. in case channel code used/after decoding process, to estimate the BER experienced by the packet.
- Using LLRs: Using the LLRs at the end of the demodulation/in case of uncoded transmission, or at the end of decoding/in case of coded transmission, average effective mutual information metric may be computed, e.g., MMIB. The effective MI metric may either be fed back to the transmitter, or used by the receiver directly to estimate BER. The estimation process may compare the computed effective MI metric against the BER curves of the same packet size and modulation and coding index.
- Using estimated effective SINR: Similarly to the effective MI above, an effective SINR such as EESM, may be computed and used for BER estimation.

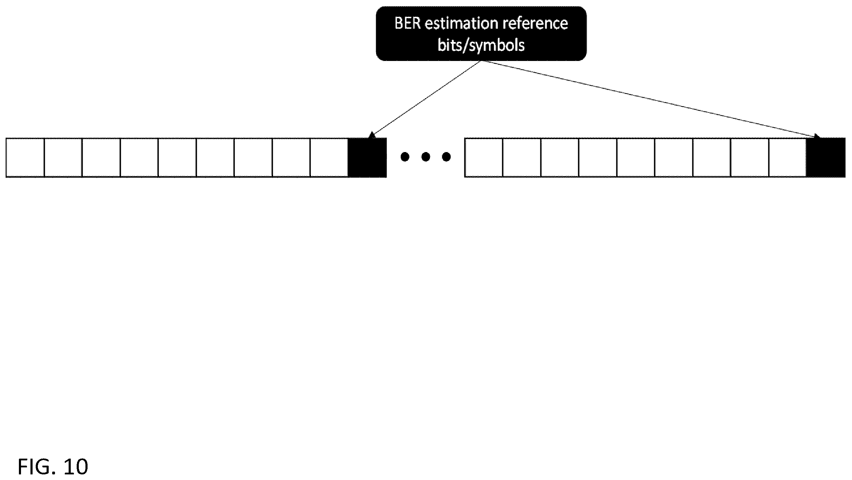

BER estimation is illustrated in Fig. 10.

In terms of overhead, for transmissions using channel code, the reference bits may be seen as a substitute for CRC bits used in typical transport block communication, given that the proposed link does not require to measure block errors but only to estimate bit error rate per packet. For transmissions without the use of channel code, the existing reference symbols used for demodulation and channel estimation, e.g., DMRS, may be used as BER estimation reference symbols.

As described above, in step 3, for packet transmission, the transmitter side of the application may encode its information into Lmax bits in each transmission occasion and deliver the bits to the network. The application may perform the encoding e.g. using a rateless JSCC code. The application may encode the packet in a format where the semantic/effective loss may be minimized for the application given the guaranteed BER. This may be for each transmission packet size between Lmin and Lmax at the agreed BER that is supported at each instance. The experience loss at the application may be different, however, the loss may be the minimal loss for that packet length. This may be due to the rateless JSCC. The packet may be delivered to the network client side of the transmitter, where the actual transmission size Ltx may be punctured out of the delivered Lmax bits before transmission.

In one embodiment, the network client may send the information on Ltx to the application to perform the puncturing before delivering the packet to the network client.

This is illustrated in Fig. 8 for the downlink and uplink cases separately.

In an embodiment, the network may receive Lmax bits at each transmission occasion from the application in step 2, and prepare the transmit packet. The network, e.g., the scheduler, in step 2 may decide on the number of bits to be transmitted over the link at the agreed BER, Ltx. The supported length Ltx may depend on the load of the network and the quality of the channel estimated by the network. The higher the load and the lower the channel quality, the smaller Ltx may be. Given the minimum packet length QoS, Lmin ≤ Ltx ≤ Lmax, however, Ltx may be a time varying parameter and decided per packet by the network, while Lmax and Lmin may be static parameters describing the link QoS. For the majority of semantic/effective applications that are of interest, such as robotic control, audio and/or video streaming, cctv face and/or pose recognition, XR chat in metaverse, etc., the traffic source at the application may generate periodic or semi-periodic packets of the same size. Therefore, the minimum number of information bits that the application requires to be delivered may also remain static.

In one embodiment, for applications with a time-varying information packet length, the agreed metrics of QoS may include a range for minimum of the packet size, e.g., (Lₘᵢₙ₋ₗ, Lₘᵢₙ₋ₕ), where the minimum packet size may be variable in that range. At each instance, the packet delivered by the application to the network client, may also include header information that determines the required minimum transmit packet size for that instance from the range (Lₘᵢₙ₋ₗ, Lₘᵢₙ₋ₕ).

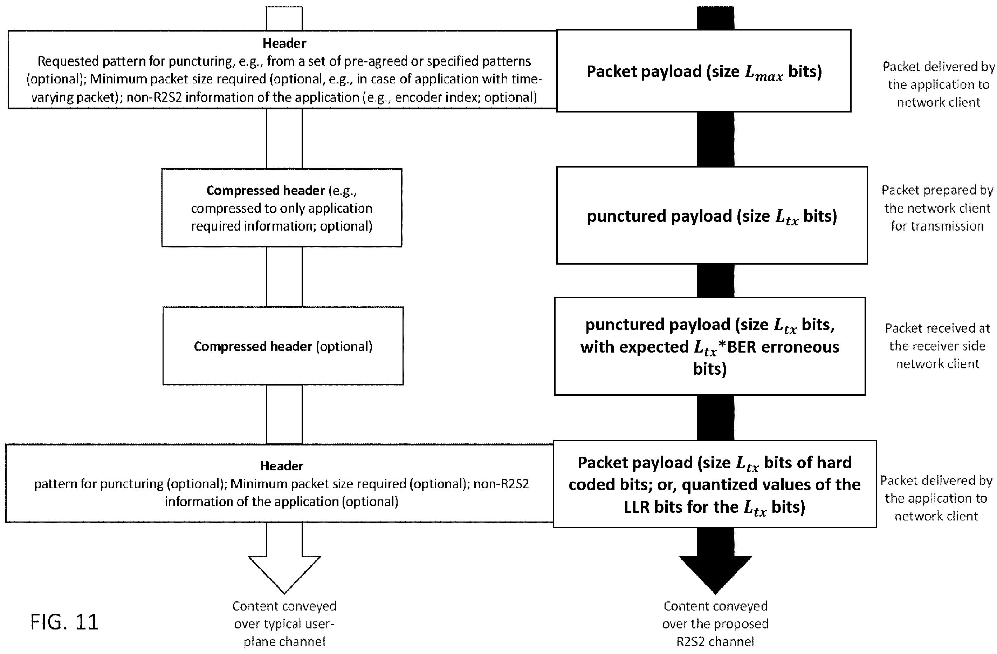

Figure 11 illustrates flow of the operations for a given packet.

The process of puncturing the Lmax bits into Ltx may follow e.g. a pre-agreed pattern that the application and network may share. E.g., the least significant bits may be conveyed by the application at the end of the bit string, and vice versa; thus the puncturing may start from the end of the bit string.

In an embodiment, the puncturing function of the Lmax bits into Ltx, at different layers of RAN stack, may be one or more of the following:
- Semi-static Ltx: E.g., at the PDCP layer prior to encryption, e.g., based on feedback received from scheduler on the number of bits that may be supported at each configured period of time which may span over a set of time instances.
- Dynamic Ltx: E.g., at the RLC layer, the segmentation process may use the knowledge from the scheduler regarding the supported length; the supported length Lt may be encoded into a separate user-plane packet or in control signaling such as DCI.
- Dynamic L_tx: E.g., a ML based PHY/MAC implementation, e.g., DeepTx/DeepRx based on the instantaneous CSI and scheduler supported number of channel use.

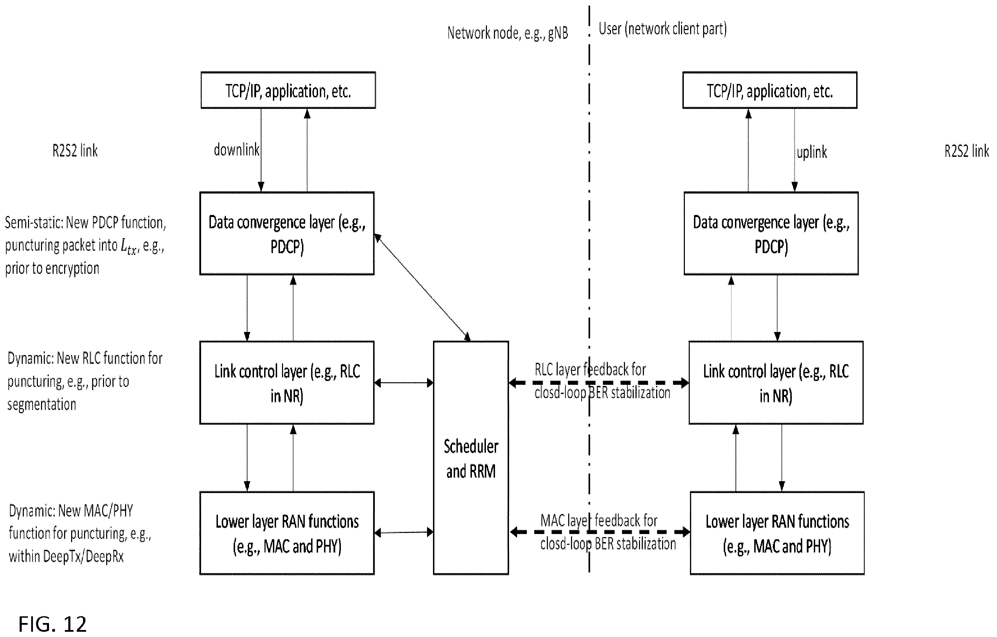

Figure 12 (sip5) illustrates various puncturing functions for different RAN layers.

Given the QoS metrics for the proposed R2S2 link, the following feedback links may be used, for example, to substitute the HARQ and/or ARQ feedbacks in cellular networks:
- A low layer, e.g., PHY/MAC layer feedback that may be used for closed-loop link adaptation with BER control. This may be different in implication of the feedback message compared to HARQ ACK/NACK, and there may be various options for the feedback:
   -- One option for such feedback may be similar to single-bit HARQ ACK/NACK which may determine whether the estimated BER at the receiver is the same or lower than the target BER (ACK) or is lower (NACK), where the latter may trigger additional redundancy bits from the network channel code to be sent by the transmitter.
   -- Another option for such feedback may be to have a multi-bit feedback message which may determine a gap between the estimated BER at the receiver for packet, and the target BER. E.g., the gap may be measured in terms of the number of estimated additional erroneous bits per 100 bits, compared to the target BER.
- A upper layer, e.g., RLC layer feedback may be used also for closed-loop control of the link adaptation in the scheduler. This may e.g. substitute the MAC layer feedback altogether, and may be specified as one feedback occasion per packet, sent at the end of the latency budget by the receiver. The content may determine a gap between the estimated BER and the target BER, to assist in stabilizing the link adaptation.

As described above for step 4, the application may receive an erroneous packet and perform rateless JSCC decoding, The received packet at the receiver side may be delivered to the application, with the erroneous bits included in the delivered packet. A header may be attached to the packet delivered to the receiver side of the application, which may notify the supported length Ltx. This may be crucial given the time variance of Ltx.

In an embodiment, the receiver side of application may also be provided by the soft bits or symbols from the receiver network functions. This may be done e.g. by quantization of the soft values into a quantization level per bit. The quantization level configuration may either be statically preconfigured between network and application or conveyed over a header to the application.

The receiver side of the application may perform rateless JSCC decoding on the received packet to extract the information from the source. This may be based, for example, on using the proposed rateless JSCC decoder.

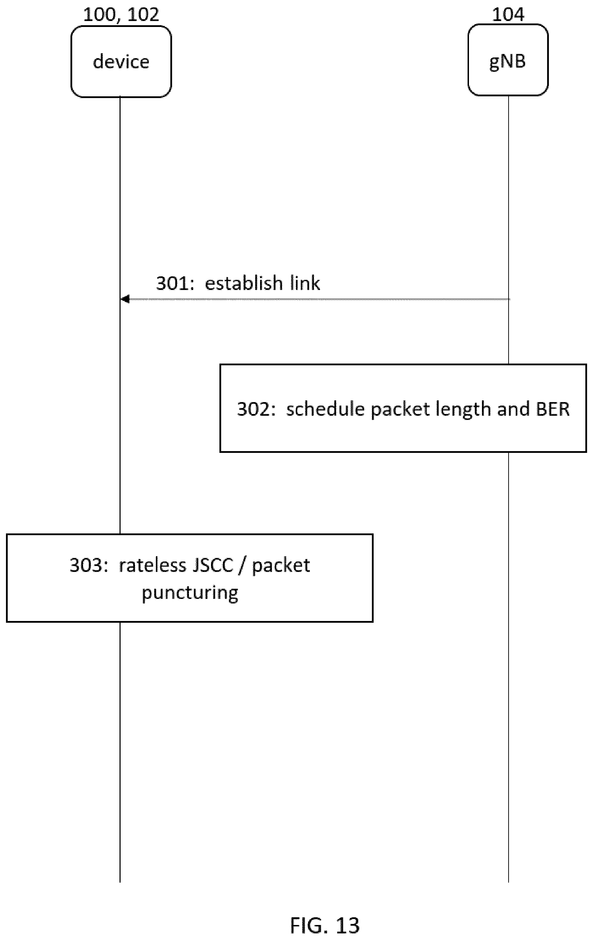

FIG. 13 illustrates a signal flow diagram according to an example embodiment. Referring to FIG. 13, at 301, an apparatus 104, such as a network node, e.g. a gNB, eNB or wireless local area network (WLAN, WiFi) access point, may establish a rateless radio link for stable semantic/effective communication, R2S2, between the apparatus 104 and a client device 100, 102, such as a terminal device or cloud server, wherein for the R2S2 link a desired quality of service, QoS, is defined including at least a desired packet length range of from a minimum data packet length Lₘᵢₙ to a maximum packet length Lₘₐₓ. The packet length may refer to packet length in bits or to packet length in symbols. At 302, the apparatus 104 may schedule a supported packet length Lₜₓ and target stable bit error rate for transmission via the R2S2 link, wherein Lₘᵢₙ ≤ Lₜₓ ≤ Lₘₐₓ. At 303, the device 100, 102 may perform, by an application, a rateless joint source and channel coding, JSCC, that encodes an original data packet into a string of bits by bit-wise treatment or into a string of symbols by symbol-wise treatment, and reduce, by a radio network client by using a puncturing pattern, the string of bits or string of symbols, into a punctured data packet to be transmitted in uplink with a target stable bit error rate scheduled by a network apparatus, such that the punctured data packet has a supported packet length Lₜₓ scheduled by the network apparatus 104.

The desired quality of service, QoS, for the R2S2 link may further include at least one of a puncturing pattern, desired bit error rate range, desired latency budget, or desired service stability rate. The apparatus 104 may establish a hybrid automatic repeat request, HARQ, feedback link or R2S2 feedback link between the apparatus 104 and the client device 100, 102, for transmission or reception of: an ACK feedback signal or a NACK feedback signal, to respectively indicate whether the target stable bit error rate is within a desired bit error rate range or is higher, and/or a multi-bit feedback signal to indicate a deviation of the target stable bit error rate from the desired bit error rate range. The device 100, 102 may indicate the supported packet length Lₜₓ in a header of a transmitted data packet. The packet length of a punctured data packet may depend on radio link conditions, wherein the packet length of the punctured data packet may be shorter on higher network load and/or in poorer radio link conditions; and/or the packet length of the punctured data packet may be longer on lower network load and/or better radio link conditions

The client device 100, 102 may, by the radio network client, transmit the punctured data packet via uplink.

A device which may be the same client device 100, 102 (1^{st} device) or a different client device (2^{nd} device), may train and combine an M number of sets of encoder/decoder neural networks to obtain a rateless JSCC code, wherein the encoder neural networks in the sets have same encoder input lengths, and same or different encoder output lengths, and the decoder neural networks in the sets have same decoder output lengths, and same or different decoder input lengths. The device may perform training of a first set of encoder/decoder neural networks over available training data to minimize a JSCC loss function; freeze the trained first set of encoder/decoder neural networks; combine the frozen first set of encoder/decoder neural networks with a second set of encoder/decoder neural networks; perform training of the combination over the available training data; and freeze the trained combination. The device may combine a previously frozen trained combination with a further set of encoder/decoder neural networks, perform training of the further combination over the available training data, and freeze the trained further combination, until each of the M number of sets of encoder/decoder neural networks has been combined, trained and frozen. The output lengths of the encoder neural networks and the input lengths of the decoder neural networks in each set may be defined and/or scheduled by a network apparatus, such that the length of the first set of encoder/decoder neural networks correspond to a minimum data packet length Lmin, the length of the further combination corresponds to a maximum packet length Lmax. The device may train the sets of encoder/decoder neural networks by using a simulated communication link between the encoder output and the decoder input, which emulates radio link behaviour during the training of the sets of encoder/decoder neural networks, wherein the radio link behaviour includes at least bit error rate and optionally packet puncturing.

A device which may be the same client device 100, 102 or a different client device (2^{nd} or 3^{rd} device), may, by an application client, perform rateless JSCC decoding of a received data packet to extract information contained in the data packet, by using the rateless JSCC code obtained above.

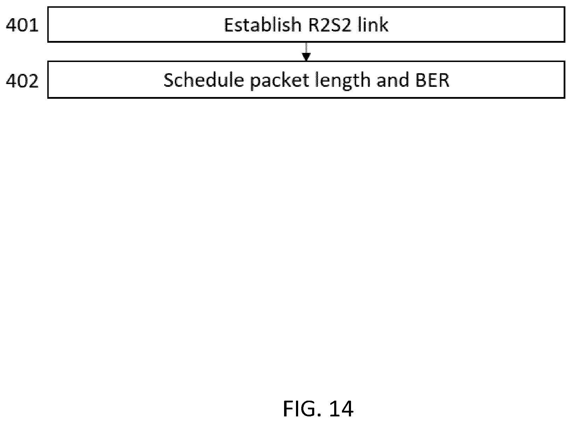

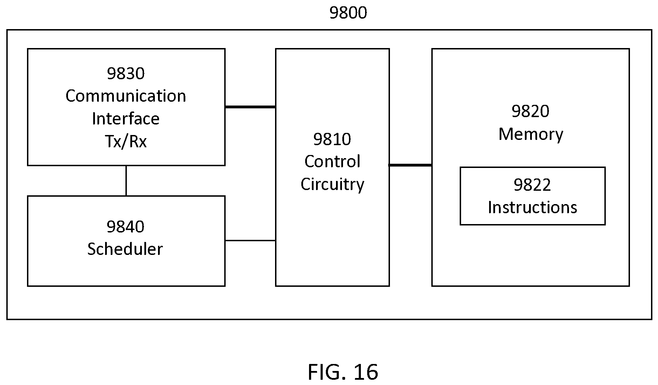

FIG. 14 illustrates a flow chart according to an example embodiment of a method performed by an apparatus 9800 depicted in FIG. 16. For example, the apparatus 9800 may be, or comprise, or be comprised in, a radio access network node 104 or a distributed unit 105 or a central unit 108. Referring to FIG. 14, in block 401, the apparatus may establish a rateless radio link for stable semantic/effective communication, R2S2, between the apparatus and a client device 100, 102, such as a terminal device or cloud server, wherein for the R2S2 link a desired quality of service, QoS, is defined including at least a desired packet length range of from a minimum data packet length Lₘᵢₙ to a maximum packet length Lₘₐₓ. In block 402, the apparatus may schedule a supported packet length Lₜₓ and target stable bit error rate for transmission via the R2S2 link, wherein Lₘᵢₙ ≤ Lₜₓ ≤ Lₘₐₓ. The desired quality of service, QoS, for the R2S2 link may further include at least one of a puncturing pattern, desired bit error rate range, desired latency budget, or desired service stability rate. The apparatus may establish a hybrid automatic repeat request, HARQ, feedback link or R2S2 feedback link between the apparatus and the client device, for transmission or reception of an ACK feedback signal or a NACK feedback signal, to respectively indicate whether the target stable bit error rate is within a desired bit error rate range or is higher, or a multi-bit feedback signal to indicate a deviation of the target stable bit error rate from the desired bit error rate range.

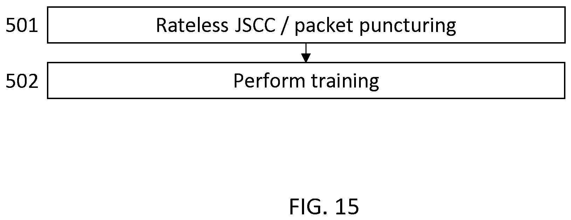

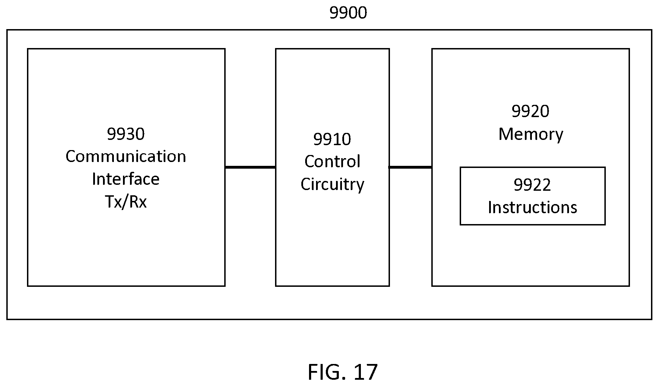

FIG. 15 illustrates a flow chart according to an example embodiment of a method performed by an apparatus or device 9900 depicted in FIG. 17. For example, the apparatus 9900 may be, or comprise, or be comprised in, a client device, such as a terminal device 100, 102 or cloud server.

Referring to FIG. 15, in block 501, the application part or application client of the client device may, in block 501, perform rateless JSCC coding that encodes an original data packet into the string of bits by bit-wise treatment or string of symbols by symbol-wise treatment. The radio network client of the client device may, in block 501, reduce by using a puncturing pattern the string of bits or string of symbols into a punctured data packet to be transmitted, such that the punctured data packet has a supported packet length Lₜₓ scheduled by the network apparatus. a minimum packet length of the punctured data packet is guaranteed with a desired bit error rate, wherein a packet length of the punctured data packet may be shorter than that of the string of bits or string of symbols. The device may indicate a supported packet length Lₜₓ in a header of a transmitted data packet. The packet length of a punctured data packet may depend on radio link conditions, wherein the packet length of the punctured data packet may be shorter on higher network load and/or in poorer radio link conditions; and/or the packet length of the punctured data packet may be longer on lower network load and/or better radio link conditions.

At block 502, a client device may perform training of neural networks. More specifically, the client device may train and combine an M number of sets of encoder/decoder neural networks to obtain a rateless JSCC code, wherein the encoder neural networks in the sets have same encoder input lengths, and same or different encoder output lengths, and the decoder neural networks in the sets have same decoder output lengths, and same or different decoder input lengths. The client device may perform training of a first set of encoder/decoder neural networks over available training data to minimize a JSCC loss function; freeze the trained first set of encoder/decoder neural networks; combine the frozen first set of encoder/decoder neural networks with a second set of encoder/decoder neural networks; perform training of the combination over the available training data; and freeze the trained combination. The client device may combine a previously frozen trained combination with a further set of encoder/decoder neural networks, perform training of the further combination over the available training data, and freeze the trained further combination, until each of the M number of sets of encoder/decoder neural networks has been combined, trained and frozen. The output lengths of the encoder neural networks and the input lengths of the decoder neural networks in each set may be defined and/or scheduled by a network apparatus, such that the length of the first set of encoder/decoder neural networks correspond to a minimum data packet length Lmin, the length of the further combination corresponds to a maximum packet length Lmax. The device may train the sets of encoder/decoder neural networks by using a simulated communication link between the encoder output and the decoder input, which emulates radio link behaviour during the training of the sets of encoder/decoder neural networks, wherein the radio link behaviour includes at least bit error rate and optionally packet puncturing.

An application client of a client device may perform rateless JSCC decoding of a received data packet to extract information contained in the data packet, by using the rateless JSCC code obtained above.

In an embodiment, a minimum packet length of a punctured data packet may be guaranteed with a desired bit error rate, wherein a packet length of the punctured data packet is shorter than that of the original data packet. The packet length of the punctured data packet may depend on radio link conditions, wherein the packet length of the punctured data packet may be shorter on higher network load and/or in poorer radio link conditions; and/or the packet length of the punctured data packet may be longer on lower network load and/or better radio link conditions.

In an embodiment, the device 100, 102 such as a terminal device, user equipment or cloud software application, may comprise an application client and a radio network client. The network apparatus 104 may be a network node, such as a gNB, eNB or wireless local area network (WLAN, WiFi) access point, for example. The stable semantic/effective communication, R2S2, link may be established by the apparatus 104. The rateless JSCC encoding and/or decoding may be performed by the application client of the device 100, 102. The scheduling, i.e., deciding on the Ltx, may be carried out by a scheduler of the apparatus 104, wherein the scheduling decision may be passed to a transmitting node, i.e., gNB 104 in downlink / radio network client of the device 100, 102 in uplink, for example, in a form of a scheduling grant. The scheduling decision may be based on the radio link conditions mentioned above. The packet puncturing may be performed by the transmitting node, i.e., gNB 104 in downlink, or the radio network client of the device 100, 102 in uplink.

In an embodiment, the rateless JSCC code enables to perform jointly source and channel coding on an information packet from a source and map it into a Lmax string of bits or symbols for transmission over a link that anticipates a certain bit/symbol error rate. The encoding process enables to assure that the criticality of the semantic and effective information from the source information packet is according to a puncturing pattern, where the most critical information may be conveyed into a minimum length of Lmin ≤ Lmax of the packet, while additional semantic and effective information may be decoded from the remaining bits/symbols. This may enable the R2S2 link scheduler to puncture the packet according to the puncturing pattern before transmission to the length Ltx based on the available resources for the link.

The blocks, related functions, and information exchanges (messages) described above by means of FIGS. 2-15 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

FIG. 16 illustrates an example of an apparatus 9800 comprising means for performing one or more of the example embodiments described above. For example, the apparatus 9800 may be, or comprise, or be comprised in, a radio access network node 104 or a distributed unit 105 or a central unit 108.

The apparatus 9800 may comprise, for example, a circuitry or a chipset applicable for realizing one or more of the example embodiments described above. The apparatus 9800 may be an electronic device comprising one or more electronic circuitries. The apparatus 9800 may comprise a communication control circuitry 9810 such as at least one processor, and at least one memory 9820 storing instructions 9822 which, when executed by the at least one processor, cause the apparatus 9800 to carry out one or more of the example embodiments described above. Such instructions 9822 may, for example, include computer program code (software). The at least one processor and the at least one memory storing the instructions may provide the means for providing or causing the performance of any of the methods and/or blocks described above.

The processor is coupled to the memory 9820. The processor is configured to read and write data to and from the memory 9820. The memory 9820 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 9820 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 9820 or, alternatively or additionally, they may be received, by the apparatus, via an electromagnetic carrier signal and/or may be copied from a physical entity such as a computer program product. Execution of the computer readable instructions causes the apparatus 9800 to perform one or more of the functionalities described above.

The memory 9820 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data.

The apparatus 9800 may further comprise or be connected to a communication interface 9830, such as a radio unit, comprising hardware and/or software for realizing communication connectivity with one or more wireless communication devices according to one or more communication protocols. The communication interface 9830 comprises at least one transmitter (Tx) and at least one receiver (Rx) that may be integrated to the apparatus 9800 or that the apparatus 9800 may be connected to. The communication interface 9830 may provide means for performing some of the blocks for one or more example embodiments described above. The communication interface 9830 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 9830 provides the apparatus with radio communication capabilities to communicate in the wireless communication network. The communication interface may, for example, provide a radio interface to one or more UEs 100, 102. The apparatus 9800 may further comprise or be connected to another interface towards a core network 110, such as the network coordinator apparatus or AMF 111, and/or to the access nodes 104 of the wireless communication network.

The apparatus 9800 may further comprise a scheduler 9840 that is configured to allocate radio resources. The scheduler 9840 may be configured along with the communication control circuitry 9810 or it may be separately configured.

It is to be noted that the apparatus 9800 may further comprise various components not illustrated in FIG. 16. The various components may be hardware components and/or software components.

FIG. 17 illustrates an example of an apparatus 9900 comprising means for performing one or more of the example embodiments described above. For example, the means may be a client device, such as a terminal device 100, 102 or cloud server.

The apparatus 9900 may comprise, for example, a circuitry or a chipset applicable for realizing one or more of the example embodiments described above. The apparatus 9900 may be an electronic device or computing system comprising one or more electronic circuitries. The apparatus 9900 may comprise a control circuitry 9910 such as at least one processor, and at least one memory 9920 storing instructions 9922 which, when executed by the at least one processor, cause the apparatus 9900 to carry out one or more of the example embodiments described above. Such instructions 9922 may, for example, include computer program code (software). The at least one processor and the at least one memory storing the instructions may provide the means for providing or causing the performance of any of the methods and/or blocks described above.

The processor is coupled to the memory 9920. The processor is configured to read and write data to and from the memory 9920. The memory 9920 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 9920 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 9920 or, alternatively or additionally, they may be received, by the apparatus, via an electromagnetic carrier signal and/or may be copied from a physical entity such as a computer program product. Execution of the computer readable instructions causes the apparatus 9900 to perform one or more of the functionalities described above.

The memory 9920 may be implemented using any suitable data storage technology, such as semiconductor-based memory devices, flash memory, magnetic memory devices and systems, optical memory devices and systems, fixed memory and/or removable memory.

The apparatus 9900 may further comprise or be connected to a communication interface 9930 comprising hardware and/or software for realizing communication connectivity according to one or more communication protocols. The communication interface 9930 may comprise at least one transmitter (Tx) and at least one receiver (Rx) that may be integrated to the apparatus 9900 or that the apparatus 9900 may be connected to. The communication interface 9930 may provide means for performing some of the blocks for one or more example embodiments described above. The communication interface 9930 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 9930 provides the apparatus with communication capabilities to communicate in the wireless communication network. The communication interface 9930 may, for example, provide a radio, cable or fiber interface to one or more network nodes 104 of a radio access network.

It is to be noted that the apparatus 9900 may further comprise various components not illustrated in FIG. 17. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus comprising means for:
establishing a rateless radio link for stable semantic/effective communication, R2S2, between the apparatus and a client device, wherein for the R2S2 link a desired quality of service, QoS, is defined including at least a desired packet length range of from a minimum data packet length Lₘᵢₙ to a maximum packet length Lₘₐₓ;
scheduling a supported packet length Lₜₓ and target stable bit error rate for transmission via the R2S2 link, wherein Lₘᵢₙ ≤ Lₜₓ ≤ Lₘₐₓ,
wherein an original data packet is encoded by rateless joint source and channel coding, into a string of bits by bit-wise treatment or into a string of symbols by symbol-wise treatment, wherein the string of bits or the string of symbols is reduced, by using a puncturing pattern, into a punctured data packet transmitted in uplink or downlink with the target stable bit error rate scheduled by the apparatus, such that the punctured data packet has the supported packet length Lₜₓ scheduled by the apparatus.

2. The apparatus according to claim 1, wherein the desired quality of service, QoS, for the R2S2 link further includes at least one of a puncturing pattern, desired bit error rate range, desired latency budget, or desired service stability rate.

3. The apparatus according to any preceding claim, further means for:
establishing a hybrid automatic repeat request, HARQ, feedback link or R2S2 feedback link between the apparatus and the client device, for transmission or reception of
an ACK feedback signal or a NACK feedback signal, to respectively indicate whether the target stable bit error rate is within a desired bit error rate range or is higher, or
a multi-bit feedback signal to indicate a deviation of the target stable bit error rate from the desired bit error rate range.

4. The apparatus according to any preceding claim, wherein it is, comprises, or is comprised in a network node, such as a gNB, eNB or wireless local area network access point.

5. The apparatus according to any preceding claim, wherein the packet length of the punctured data packet depends on radio link conditions, wherein
the packet length of the punctured data packet is shorter on higher network load and/or in poorer radio link conditions;
the packet length of the punctured data packet is longer on lower network load and/or better radio link conditions.

6. A method comprising:
establishing, by an apparatus, a rateless radio link for stable semantic/effective communication, R2S2, between the apparatus and a client device, wherein for the R2S2 link a desired quality of service, QoS, is defined including at least a desired packet length range of from a minimum data packet length Lₘᵢₙ to a maximum packet length Lₘₐₓ;
scheduling, by the apparatus, a supported packet length Lₜₓ and target stable bit error rate for transmission via the R2S2 link, wherein Lₘᵢₙ ≤ Lₜₓ ≤ Lₘₐₓ,
wherein an original data packet is encoded by rateless joint source and channel coding, into a string of bits by bit-wise treatment or into a string of symbols by symbol-wise treatment, wherein the string of bits or the string of symbols is reduced, by using a puncturing pattern, into a punctured data packet transmitted in uplink or downlink with the target stable bit error rate scheduled by the apparatus, such that the punctured data packet has the supported packet length Lₜₓ scheduled by the apparatus.

7. The method according to claim 6, wherein the desired quality of service, QoS, for the R2S2 link further includes at least one of a puncturing pattern, desired bit error rate range, desired latency budget, or desired service stability rate.

8. The method according to claim 6 or 7, further comprising:
establishing, by the apparatus, a hybrid automatic repeat request, HARQ, feedback link or R2S2 feedback link between the apparatus and the client device, for transmission or reception of
an ACK feedback signal or a NACK feedback signal, to respectively indicate whether the target stable bit error rate is within a desired bit error rate range or is higher, or
a multi-bit feedback signal to indicate a deviation of the target stable bit error rate from the desired bit error rate range.

9. The method according to claim 6, 7 or 8, wherein the apparatus is, comprises, or is comprised in a network node, such as a gNB, eNB or wireless local area network access point.

10. The method according to any preceding claim 6 to 9, wherein the packet length of the punctured data packet depends on radio link conditions, wherein
the packet length of the punctured data packet is shorter on higher network load and/or in poorer radio link conditions;
the packet length of the punctured data packet is longer on lower network load and/or better radio link conditions.

11. A non-transitory computer readable medium comprising program instructions which, when executed by an apparatus, cause the apparatus to perform at least the following:
establish a rateless radio link for stable semantic/effective communication, R2S2, between the apparatus and a client device, wherein for the R2S2 link a desired quality of service, QoS, is defined including at least a desired packet length range of from a minimum data packet length Lₘᵢₙ to a maximum packet length Lₘₐₓ;
schedule a supported packet length Lₜₓ and target stable bit error rate for transmission via the R2S2 link, wherein Lₘᵢₙ ≤ Lₜₓ ≤ Lₘₐₓ,
wherein an original data packet is encoded by rateless joint source and channel coding, into a string of bits by bit-wise treatment or into a string of symbols by symbol-wise treatment, wherein the string of bits or the string of symbols is reduced, by using a puncturing pattern, into a punctured data packet transmitted in uplink or downlink with the target stable bit error rate scheduled by the apparatus, such that the punctured data packet has the supported packet length Lₜₓ scheduled by the apparatus.
